# FASCICULE DE BREVET EUROPEEN

(11) **EP 3 276 200 B1**
(45) Date de publication et mention de la délivrance du brevet: **06.02.2019**
(21) Numéro de dépôt: 17182840.3
(22) Date de dépôt: 24.07.2017
(51) Int. Cl.: F16F 13/26

(54) **DISPOSITIF ANTIVIBRATOIRE HYDRAULIQUE**
HYDRAULISCHE SCHWINGUNGSDÄMPFENDE VORRICHTUNG
HYDRAULIC ANTI-VIBRATION DEVICE

(30) Priorité: 26.07.2016 FR 1657189
(43) Date de publication de la demande: 31.01.2018
(73) Titulaire: HUTCHINSON, 75008 Paris (FR)
(72) Inventeur: LEMAIRE, Gabriel, 28200 Saint-Denis-les-Ponts (FR); BELLAMY, Alain, 41310 AMBLOY (FR)
(74) Mandataire: Cabinet Plasseraud

(56) Documents cités:
- WO-A1-2015/136160
- DE-A1-102010 060 885
- DE-A1-102014 211 954
- US-A- 5 792 948

## Description

La présente invention est relative aux dispositifs antivibratoires hydrauliques.

Plus particulièrement, l'invention concerne un dispositif antivibratoire hydraulique destiné à être interposé aux fins d'amortissement entre des premier et deuxième éléments rigides, ce dispositif antivibratoire comprenant :
- des première et deuxième armatures destinées à être fixées aux deux éléments rigides à réunir,
- un corps en élastomère qui relie entre elles les première et deuxième armatures et qui délimite au moins partiellement une première chambre hydraulique,
- une deuxième chambre hydraulique déformable qui communique avec la première chambre hydraulique par l'intermédiaire d'un passage étranglé, la première et deuxième chambres hydrauliques et le passage étranglé formant un circuit hydraulique rempli de liquide,
- un actionneur électromagnétique adapté pour commander le comportement antivibratoire du dispositif antivibratoire.

Le document WO2015/136160 décrit un exemple de dispositif antivibratoire de ce type.

La présente invention a notamment pour objet de perfectionner les supports antivibratoires du type ci-dessus, notamment pour diminuer leur consommation d'énergie.

A cet effet, selon l'invention, un dispositif antivibratoire du genre en question est caractérisé en ce que ledit actionneur comprend une ventouse à aimant permanent comportant :
- un circuit magnétique incluant un organe d'actionnement mobile entre une première position et une deuxième position,
- au moins un ressort sollicitant l'organe d'actionnement avec une première force orientée vers la première position,
- un aimant permanent créant un champ magnétique permanent dans le circuit magnétique et sollicitant l'organe d'actionnement avec une deuxième force orientée vers la deuxième position, la première force étant supérieure à la deuxième force lorsque l'organe d'actionnement est dans la première position et la deuxième force étant supérieure à la première force lorsque l'organe d'actionnement est dans la deuxième position,
- au moins une bobine alimentée électriquement par un dispositif de commande, le dispositif de commande étant adapté pour sélectivement soit augmenter ledit champ magnétique pour faire passer ledit organe d'actionnement de la première à la deuxième position contre la sollicitation du ressort, soit diminuer ledit champ magnétique pour faire passer ledit organe d'actionnement de la deuxième à la première position sous l'effet du ressort.

Grâce à ces dispositions, le fonctionnement de l'actionneur est très peu consommateur d'énergie, puisque cet actionneur est bistable et consomme de l'énergie uniquement pour passer de l'une à l'autre des deux positions. Il est ainsi possible, le cas échéant, de rendre autonome le dispositif antivibratoire.

Dans divers modes de réalisation du dispositif antivibratoire selon l'invention, on peut éventuellement avoir recours en outre à l'une et/ou à l'autre des dispositions suivantes :
- ledit actionneur est adapté pour sélectivement bloquer ou laisser libre une paroi mobile qui délimite partiellement la première chambre hydraulique ;
- l'organe d'actionnement est mobile en translation sur une course comprise entre 0.5 et 2 mm, avantageusement entre 0,7 et 1,5 mm entre les première et deuxième positions ;

- le dispositif de commande est adapté pour générer une impulsion de courant dans la bobine, soit dans un premier sens, soit dans un deuxième sens opposé au deuxième sens, pour sélectivement soit faire passer ledit organe d'actionnement de la première à la deuxième position, soit faire passer ledit organe d'actionnement de la deuxième à la première position ;
- ladite impulsion de courant présente une durée inférieure à 100 ms ;
- ladite impulsion de courant présente une puissance comprise entre 0,1 W et 1,5 W ;
- l'actionneur comporte :
   - une carcasse ferromagnétique en forme de U ayant une base et deux ailes s'étendant jusqu'à des extrémités libres de part et d'autre d'un axe central, l'organe d'actionnement comportant une palette en matériau ferromagnétique qui est mobile selon l'axe central et disposée entre les extrémités libres des deux ailes,
   - un noyau en matériau ferromagnétique solidaire de la carcasse et s'étendant longitudinalement selon l'axe central entre une première extrémité proche de la base et une deuxième extrémité proche de la palette de l'organe d'actionnement, la palette étant écartée de la deuxième extrémité du noyau dans la première position et au contact de la deuxième extrémité du noyau dans la deuxième position, et la bobine étant enroulée autour dudit noyau ;
- l'aimant permanent est interposé entre le noyau et la base de la carcasse ;
- le dispositif antivibratoire comporte en outre une chambre pneumatique qui est délimitée vers l'actionneur par un fond doté d'un orifice et qui est séparée de la première chambre hydraulique par une paroi souple, l'organe d'actionnement étant adapté pour obturer ledit orifice sous la sollicitation du ressort lorsque l'organe d'actionnement est dans la première position, le ressort étant adapté pour laisser l'organe d'actionnement ouvrir temporairement ledit orifice en cas de surpression dans la chambre pneumatique ;
- le dispositif antivibratoire comporte en outre une source d'énergie, ledit dispositif antivibratoire étant entièrement alimenté par ladite source d'énergie ;
- ladite source d'énergie comprend un dispositif générateur de courant électrique qui comprend d'une part, une microturbine montée rotative dans le passage étranglé et d'autre part, une génératrice couplée à la microturbine pour produire du courant électrique lorsque la microturbine tourne ;
- le dispositif antivibratoire comporte en outre :
   - un convertisseur adapté pour convertir en courant continu un courant électrique produit par la génératrice,
- un dispositif de stockage d'énergie électrique alimenté par le convertisseur et alimentant le dispositif de commande ;
- ladite source d'énergie comprend au moins une batterie ;
- le dispositif antivibratoire comporte en outre un capteur de vibrations solidaire d'une des première et deuxième armatures.

D'autres caractéristiques et avantages de l'invention apparaîtront au cours de la description suivante de deux de ses formes de réalisation, données à titre d'exemples non limitatifs, en regard des dessins joints.

Sur les dessins :
- les figures 1 et 2 sont des vues en perspective, respectivement de trois quart de dessus et de trois quart de dessous, d'un dispositif antivibratoire selon une forme de réalisation de l'invention,
- les figures 3 et 4 sont des vues en perspective du dispositif antivibratoire des figures 1 et 2, en coupe axiale respectivement selon les lignes III-III et IV-IV de la figure 1,
   - les figures 5 et 6 sont des vues en perspective du dispositif antivibratoire des figures 1 et 2, en coupe radiale respectivement dans deux plans radiaux différents, et la paroi latérale annulaire du boîtier du dispositif étant supprimée pour plus de clarté sur la figure 6,
   - les figures 7 et 8 sont des vues en perspective de l'actionneur du dispositif antivibratoire des figures 1 à 6, respectivement de trois quart de dessus et de trois quart de dessous,
   - la figure 9 est une vue en coupe axiale de l'actionneur des figures 7 et 8,
   - la figure 10 est un schéma bloc du circuit électronique équipant le dispositif antivibratoire de la figure 1,
   - et la figure 11 est un schéma bloc similaire à celui de la figure 10, dans une deuxième forme de réalisation de l'invention.

Sur les différentes figures, les mêmes références désignent des éléments identiques ou similaires.

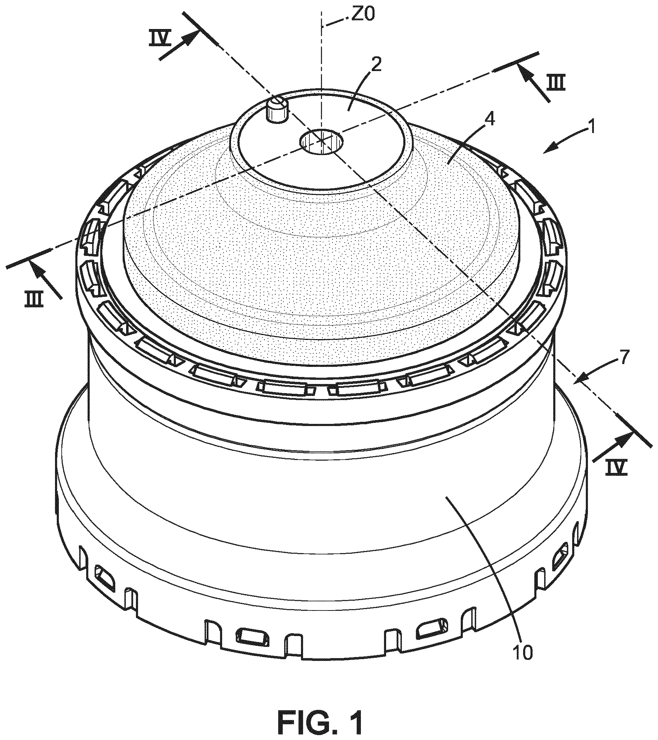

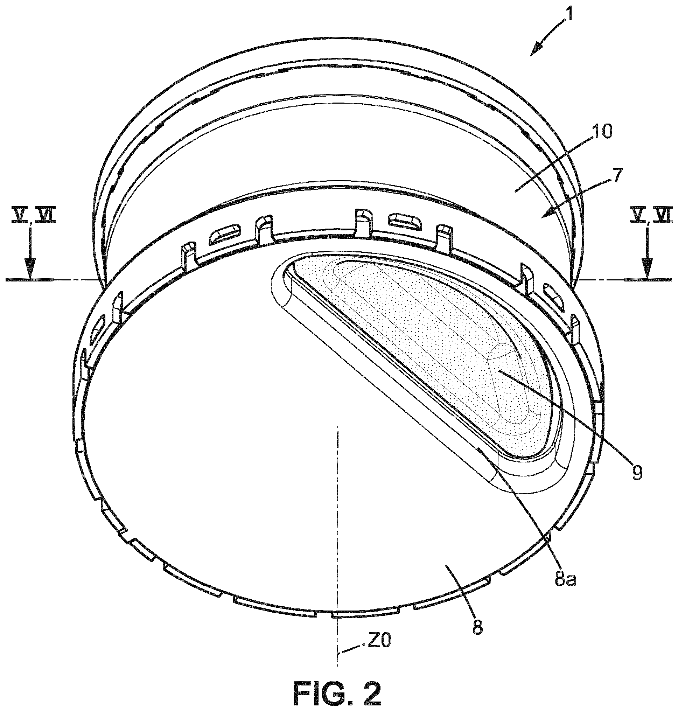

Les figures 1 à 4 représentent un dispositif antivibratoire hydraulique 1, comportant :
- une première armature rigide 2 présentant par exemple la forme d'une embase métallique et destinée à être fixée notamment au moteur d'un véhicule pour le supporter,
- une deuxième armature rigide 3, par exemple une armature annulaire en métal ou matière plastique, qui est destinée à être fixée par exemple à la caisse du véhicule,
- un corps en élastomère 4 capable de supporter notamment les efforts statiques dus au poids du moteur du véhicule et reliant les première et deuxième armatures 2, 3, ce corps en élastomère pouvant présenter par exemple une forme de cloche qui s'étend axialement selon un axe Z0 par exemple vertical, entre un sommet adhérisé et surmoulé sur la première armature 2 et une base annulaire surmoulée et adhérisée sur la deuxième armature 3.

Le dispositif antivibratoire 1 comporte en outre une cloison rigide 5 radiale par rapport à l'axe Z0, solidarisée avec la deuxième armature 3 et appliquée de façon étanche contre la base du corps en élastomère.

La cloison rigide 5 délimite avec le corps en élastomère 4 une première chambre A hydraulique, en l'occurrence une chambre de travail. La chambre de travail A communique par un passage étranglé C avec une deuxième chambre B hydraulique, en l'occurrence une chambre de compensation, partiellement délimitée par une paroi déformable, notamment une membrane souple en élastomère 6 formant soufflet. La chambre de travail A, la chambre de compensation B et le passage étranglé C forment ensemble un circuit hydraulique rempli de liquide, notamment du glycol ou autre.

Le passage étranglé C est dimensionné pour présenter une fréquence de résonance comprise par exemple entre 5 et 20 Hz, typiquement entre 8 et 12 Hz, correspondant aux mouvements de hachis dus au roulage du véhicule.

Par ailleurs, le dispositif antivibratoire comporte en outre un boîtier 7, qui est solidaire de la deuxième armature 3 et s'étend à l'opposé de la première armature 2 à partir de la deuxième armature 3.

Le boîtier 7 peut éventuellement être réalisé en matière plastique, notamment moulée.

Le boîtier 7 peut être réalisé en deux pièces :
- une partie principale comprenant une paroi latérale annulaire 10 s'étendant axialement selon l'axe Z0 entre une première extrémité voisine de la première armature et une deuxième extrémité ouverte éloignée de la deuxième armature,
- et un fond 8 fermant la deuxième extrémité de la paroi annulaire 10.

La première extrémité de la paroi annulaire 10 est solidarisée à la deuxième armature 3 par exemple par clipsage, ou par tout autre moyen connu. Un joint d'étanchéité annulaire 4a peut être interposé entre la première extrémité de la paroi latérale 10 et la deuxième armature 3. Ce joint d'étanchéité 4a peut avantageusement être formé par une partie de la base du corps en élastomère 4.

La deuxième extrémité de la paroi annulaire 10 est solidarisée au fond 8 par exemple par clipsage, ou par tout autre moyen connu. Un joint d'étanchéité annulaire 8b peut être interposé entre la deuxième extrémité de la paroi latérale 10 et le fond 8. Le volume intérieur 7a délimité par le boîtier 7 est ainsi isolé de façon étanche par rapport à l'extérieur.

Le fond 8 peut comporter une ouverture 8a obturée de façon étanche par paroi aisément déformable telle qu'une membrane souple en élastomère 9 formant soufflet, qui permet de maintenir l'espace intérieur 7a du boîtier 7 à pression atmosphérique indépendamment des mouvements de la membrane souple 6 ou des variations de température.

La partir principale du boîtier comporte en outre une paroi transversale 11, perpendiculaire à l'axe Z0, qui est au contact de la cloison 10. La paroi transversale 11 est solidaire de la paroi annulaire 10 et ferme l'espace intérieur 7a du boîtier au voisinage de la première extrémité de ladite paroi latérale 10. La paroi transversale 11 peut être moulée d'une seule pièce avec la paroi annulaire 10.

La paroi transversale 11 peut comporter une gorge 11a ouverte vers la cloison 5 et recouverte par ladite cloison 5. La gorge 11a délimite le passage étranglé C avec la cloison 5. Le passage étranglé C peut communiquer avec la chambre de travail A par une ouverture ménagée dans la cloison 5.

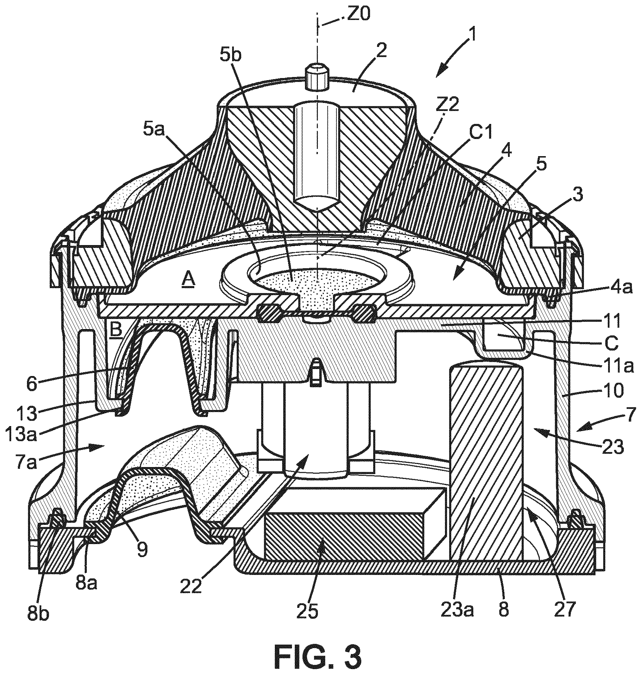

La paroi transversale 11 peut en outre présenter un renfoncement 13 (figure 3) ouvert vers la cloison 5 et recouvert par ladite cloison 5. La gorge 11a débouche dans le renfoncement 13. Le renfoncement 13 peut comporter une ouverture 13a obturée par la membrane souple 6 susmentionnée. Le renfoncement 13, la membrane 6 et la cloison 5 délimitent ensemble la chambre de compensation B.

La paroi transversale 11 peut en outre comporter une cuvette 12 dont la surface concave 12a est disposée en regard d'un évidement 5a ménagé dans la cloison 5. L'évidement est obturé par une membrane souple 5b en élastomère qui recouvre la cuvette 12. La cuvette 12 délimite avec la membrane souple 5b une chambre pneumatique P, qui communique avec l'espace intérieur 7a du boîtier 7, par un orifice 12b ménagé dans la cuvette 12. L'orifice 12b peut être centré sur un axe Z2 parallèle à l'axe Z0.

Le boîtier 7 peut en outre comporter un logement 14, par exemple de forme cylindrique, qui peut être formé d'une seule pièce avec la paroi latérale 10 et la paroi transversale 11, et disposé sous la paroi transversale 11. Le passage étrangle C peut comporter une première partie C1 qui fait communiquer la chambre de travail A avec l'intérieur du logement 14, et une deuxième partie C2 qui fait communiquer l'intérieur du logement 14 avec la chambre de compensation B.

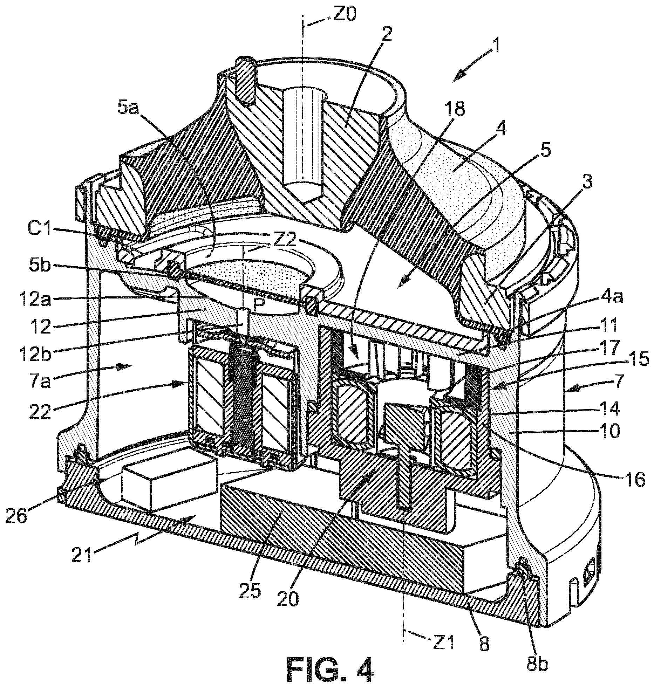

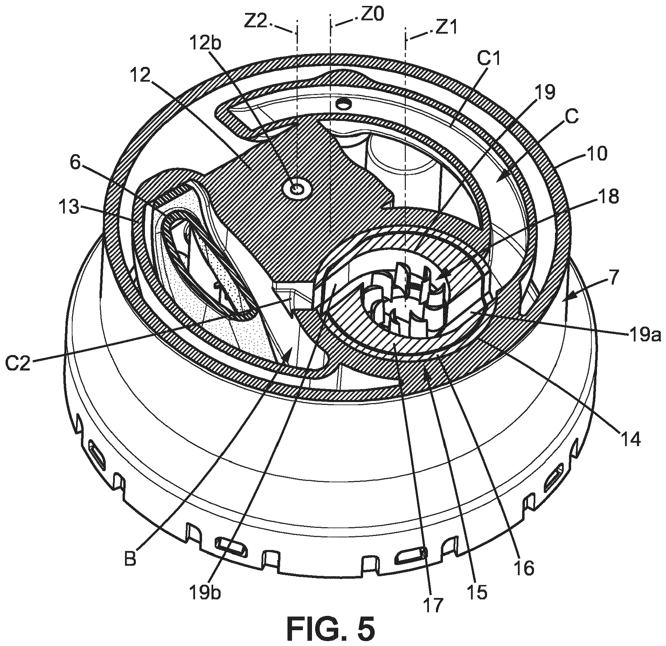

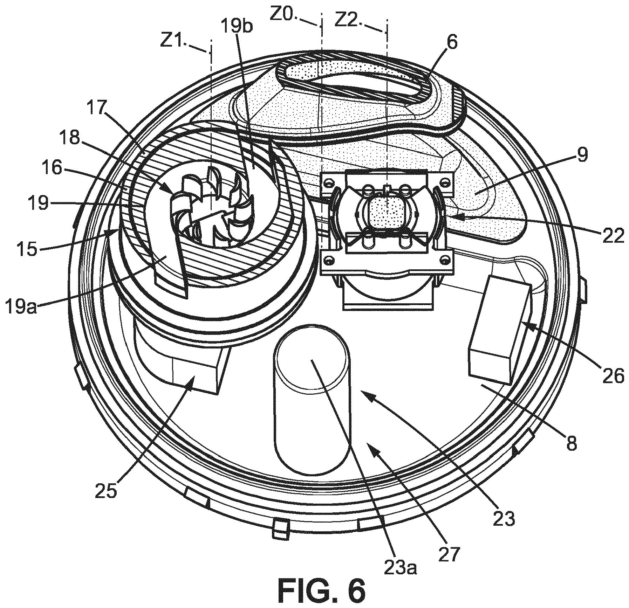

Le logement 14 peut recevoir par emboîtement, un carter externe 16 d'un dispositif générateur de courant électrique 15. Comme représenté sur les figures 4 à 6, le dispositif générateur de courant électrique 15 peut comporter un carter de microturbine 17, délimitant une chambre de microturbine 19 dans laquelle une microturbine 18 est montée rotative autour d'un axe de rotation Z1, par exemple parallèle à l'axe Z0. La chambre de microturbine 19 peut présenter une forme sensiblement cylindrique centrée sur l'axe de rotation Z1, et elle peut communiquer respectivement avec les première et deuxième parties C1, C2 du passage étranglé, par deux ajutages 19a, 19b délimités par le carter de microturbine 17. Les deux ajutages 19a, 19b peuvent avantageusement déboucher sensiblement tangentiellement dans la chambre de microturbine 19. Les ajutages 19a, 19b peuvent déboucher dans la chambre de microturbine 19 en des positions sensiblement diamétralement opposées par rapport à l'axe de rotation Z1.

Avantageusement, la microturbine 18 est conformée pour être entraînée toujours dans un même sens de rotation par le liquide du circuit hydraulique lorsque ledit liquide se déplace alternativement dans les premier et deuxième sens opposés dans le passage étranglé C.

La microturbine 18 et la chambre de microturbine 19 peuvent être par exemple telles que décrites dans le document WO2015/136160 susmentionné.

Comme représenté sur la figure 4, le dispositif générateur de courant électrique 15 comporte en outre une génératrice 20 couplée à la microturbine 18 pour produire du courant électrique lorsque la microturbine 18 tourne. Cette génératrice peut être par exemple telle que décrite dans le document WO2015/136160 susmentionné.

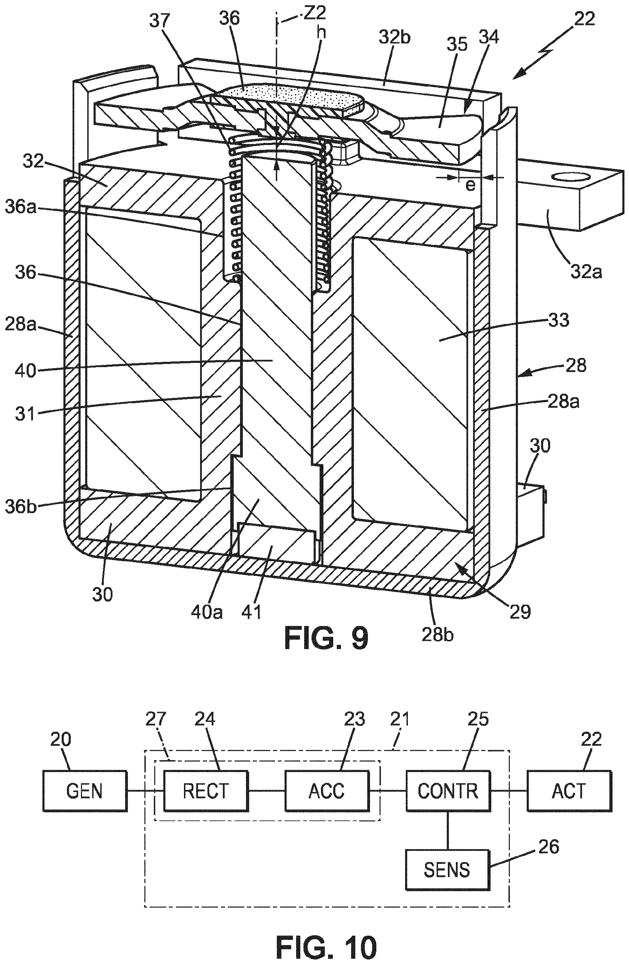

Comme représenté sur les figures 4, 6, 10, le dispositif antivibratoire 1 comporte en outre un circuit électronique 21 commandant un actionneur électromagnétique 22 qui est adapté pour sélectivement bloquer ou laisser libre la membrane souple 5b (ou plus généralement, l'actionneur électromagnétique 22 est adapté pour commander le comportement antivibratoire du dispositif antivibratoire, éventuellement en agissant sur un autre élément que la membrane souple 5b).

Le circuit électronique 21 peut comporter par exemple :
- un convertisseur 24 (RECT) alimenté par la génératrice 20 (GEN) et générant un courant continu à partir du courant alternatif produit par ladite génératrice 20,
- un dispositif de stockage d'énergie électrique 23 (ACC), par exemple une capacité 23a (ou un ensemble de plusieurs capacités) alimentée par le convertisseur 24,
- un dispositif de commande 25 (CONTR), par exemple comprenant un microcontrôleur, alimenté par le dispositif de stockage 23 et commandant l'actionneur 22 (ACT),
- un capteur 26 (SENS) relié au dispositif de commande 25, par exemple un capteur de vibrations tel qu'un accéléromètre ou autre.

L'ensemble du circuit électronique 21 peut être logé dans l'espace intérieur 7a du boîtier 7, et ne nécessite pas d'échanges d'informations avec l'extérieur ni d'alimentation électrique extérieure.

Du fait que le boîtier 7 est étanche, le circuit électronique 21 n'a pas besoin d'être spécialement protégé contre l'humidité et les agressions extérieures, ce qui diminue le coût du dispositif antivibratoire.

Eventuellement, le capteur 26 ou un capteur supplémentaire, pourrait être disposé ailleurs que dans le boîtier 7 (par exemple, il pourrait être lié rigidement à la première armature 2), selon l'application envisagée et le montage du dispositif antivibratoire 1.

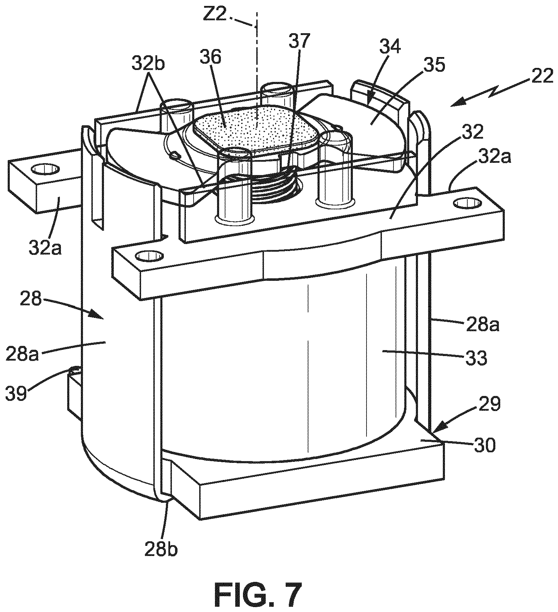

Comme représenté sur les figures 4 et 7-9, l'actionneur 22 peut par exemple comporter une valve 36 adaptée pour sélectivement ouvrir et fermer l'orifice 12b de la chambre pneumatique P pour sélectivement l'isoler ou la mettre à pression atmosphérique (c'est-à-dire à la pression intérieure du boîtier 7).

Celle valve 36 peut avantageusement faire office également de clapet, comme il sera expliqué ci-après, en permettant uniquement la sortie d'air de la chambre pneumatique P vers l'espace intérieur 7a du boîtier 7 lorsque la valve 36 ferme l'orifice 12a, mais non l'inverse.

Avantageusement, l'actionneur 22 comprend une ventouse à aimant permanent comportant :
- un circuit magnétique 28, 34, 40 incluant un organe d'actionnement 34 qui inclut ou porte la valve 36 susmentionné et qui est mobile entre une première position (non représentée) où la valve 36 est appliquée sous la cuvette 12 en fermant l'orifice 12b, et une deuxième position (représentée sur les figures) d'ouverture de l'orifice 12b où la valve 36 est à distance de la paroi de la cuvette 12,
- au moins un ressort 37 sollicitant l'organe d'actionnement 34 avec une première force orientée vers la première position,
- au moins un aimant permanent 41 créant un champ magnétique permanent B0 dans le circuit magnétique et sollicitant l'organe d'actionnement 34 avec une deuxième force orientée vers la deuxième position, la première force étant supérieure à la deuxième force lorsque l'organe d'actionnement 34 est dans la première position et la deuxième force étant supérieure à la première force lorsque l'organe d'actionnement 34 est dans la deuxième position,
- au moins une bobine 33 alimentée électriquement par le dispositif de commande 25.

Le dispositif de commande 25 commande le passage de la deuxième position à la première position en créant un courant dans un premier sens dans la bobine 33, qui crée un champ magnétique B1 en sens inverse du champ magnétique permanent B0 susmentionné, de façon à diminuer le champ magnétique résultat suffisamment pour que le ressort 37 déplace l'organe d'actionnement 34 dans la première position.

Inversement, le dispositif de commande 25 commande le passage de la première position à la deuxième position en créant un courant dans la bobine 33, dans un deuxième sens opposé au premier sens, qui crée un champ magnétique B'1 de même sens que le champ magnétique permanent B0 susmentionné, de façon à augmenter le champ magnétique résultant suffisamment pour vaincre la force du ressort 37 et déplacer l'organe d'actionnement 34 dans la deuxième position.

Avantageusement, le dispositif de commande 25 est adapté pour générer une simple impulsion de courant dans la bobine 33 pour sélectivement faire passer l'organe d'actionnement 34 soit de la première à la deuxième position soit de la deuxième à la première position.

Cette impulsion de courant peut présenter une durée t inférieure à 100 ms.

L'impulsion de courant peut par ailleurs présenter une puissance p comprise entre 0,1 W et 1,5 W.

L'énergie électrique E = p.t consommée par une transition entre les deux positions de l'organe d'actionnement, est donc très faible, ce qui contribue à l'autonomie énergétique du dispositif antivibratoire 1, et permet par ailleurs de diminuer la taille, le poids et le coût de la bobine 33.

L'organe d'actionnement 34 est mobile en translation selon l'axe Z2, par exemple sur une course h comprise entre 0.5 et 2 mm, avantageusement entre 0,7 et 1.5 mm, entre les première et deuxième positions. Un tel déplacement de faible amplitude est suffisant dans le cas présent, et contribue également à limiter l'énergie consommée par chaque transition entre les deux positions de l'organe d'actionnement 34.

Dans l'exemple particulier représenté, le circuit magnétique susmentionné peut comporter :
- une carcasse ferromagnétique 28 en forme de U ayant une base 28b et deux ailes 28a s'étendant jusqu'à des extrémités libres de part et d'autre de l'axe Z2,
- une palette 35 en matériau ferromagnétique qui appartient à l'organe d'actionnement 34 et porte la valve 36 (la valve 36 peut être un tampon d'élastomère, par exemple surmoulé sur la palette 35), la palette 35 étant mobile selon l'axe Z2 et disposée entre les extrémités libres des deux ailes 28aavec un faible entrefer e laissé entre la palette 35 et chaque aile 28a,
- un noyau 40 en matériau ferromagnétique solidaire de la carcasse 28 et s'étendant longitudinalement selon l'axe Z2 entre une première extrémité proche de la base 28b et une deuxième extrémité proche de la palette 35 de l'organe d'actionnement, la palette 35 étant écartée de la deuxième extrémité du noyau 40 dans la première position et au contact de la deuxième extrémité du noyau dans la deuxième position, et la bobine 33 étant enroulée autour dudit noyau.

L'aimant permanent 41 peut être interposé axialement entre la première extrémité du noyau 40 et la base 28b de la carcasse.

La bobine 33 peut être enroulée sur un support 29 en matière plastique ou autre. Le support 29 peut comporter :
- une embase 30 perpendiculaire à l'axe Z2 et disposée sur la base 28b, au contact de ladite base 28b,
- un noyau 31 s'étendant selon l'axe Z2 et délimitant une cheminée axiale 36 dans laquelle est emboîté sans jeu le noyau 40 ferromagnétique, la cheminée axiale 36 présentant une première partie élargie 36a proche de l'organe d'actionnement 34 et une deuxième partie élargie proche de l'embase 30, la première partie élargie 36a formant un épaulement contre lequel prend appui le ressort 37 pour pousser l'organe d'actionnement 34 vers la première position, et la deuxième partie élargie 36b accueillant une partie élargie du noyau 40 de façon à maintenir axialement le noyau 40 contre l'aimant permanent 41 et l'aimant permanent 41 contre la base 28b,
- un flasque 31 disposé sous l'organe d'actionnement 34, le noyau 40 et le ressort 37 faisant saillie hors du flasque 32 vers la palette 35.

Le flasque 32 peut comporter des découpes 32a dans lesquelles sont emboîtées les ailes 28a de la carcasse 28.

Le flasque 32 peut également comporter des guides 32b qui font saillie axialement selon l'axe Z2 vers la cuvette 12 et viennent en appui sous ladite cuvette 12. Ces guides 32b peuvent encadrer la palette 35 pour la guider dans son mouvement axial et garantissent le bon positionnement axial de l'actionneur électromagnétique 22.

L'embase 29 peut comporter des contacts électriques 39, qui relient la bobine 33 au dispositif de commande 25.

Le dispositif antivibratoire 1 qui vient d'être décrit fonctionne comme suit.

Lorsque le véhicule dans lequel est installé le dispositif antivibratoire fonctionne, les mouvements vibratoires du moteur produisent des mouvements de liquide dans le passage étranglé C entre les chambres hydrauliques A et B. Ces mouvements de liquide mettent en rotation la microturbine 18, de sorte que la génératrice génère un courant électrique qui est redressé par le convertisseur 24 et stocké dans le dispositif de stockage 23.

Lorsque le moteur fonctionne au ralenti sans roulage du véhicule, les mouvements relatifs entre les première et deuxième armatures 2, 3 sont généralement de fréquence comprise entre 10 et 40 Hz selon le type de moteur et de faible amplitude (inférieure à 0,2 mm). Dans ces conditions, la puissance électrique produite par la génératrice 20 est relativement faible, par exemple de quelques dizaines à quelques centaines de milliwatts. Dans ces circonstances, détectées à l'aide du capteur 26, le dispositif de commande 25 commande l'actionneur 22 pour que l'organe d'actionnement 34 soit dans la deuxième position, de façon à laisser libre la membrane souple 5b qui a alors un effet de découplage évitant de transmettre les vibrations du moteur à la caisse du véhicule.

Lorsque le véhicule roule, les mouvements relatifs dits de hachis entre les première et deuxième armatures 2, 3 sont de fréquence relativement faible (généralement comprise entre 10 et 15 Hz selon le type de moteur) et de grande amplitude (supérieure à 0,3 mm). Dans ces conditions, la puissance électrique produite par la génératrice 20 peut être plus importante, par exemple de quelques Watts (par exemple de l'ordre de 2 W). Dans ces circonstances, détectées à l'aide du capteur 26, le dispositif de commande 25 commande l'actionneur 22 pour que l'organe d'actionnement 34 soit dans la première position. Dans cette position, le ressort étant adapté pour laisser l'organe d'actionnement 34 ouvrir temporairement l'orifice 12b en cas de surpression dans la chambre pneumatique P. Ainsi, le chambre pneumatique P se vide progressivement de son air vers l'intérieur du boîtier 7, sous l'effet des mouvements de la membrane souple 5b dus aux mouvements vibratoires du moteur, de sorte que la paroi mobile vient progressivement se plaquer contre le surface concave 12a de la cuvette 12 au fur et à mesure que le vide se fait dans la chambre pneumatique P, ce qui bloque la membrane souple 5b.

On obtient ainsi deux modes de fonctionnement différents du dispositif antivibratoire 1 en fonction du régime moteur, détecté par le capteur 26.

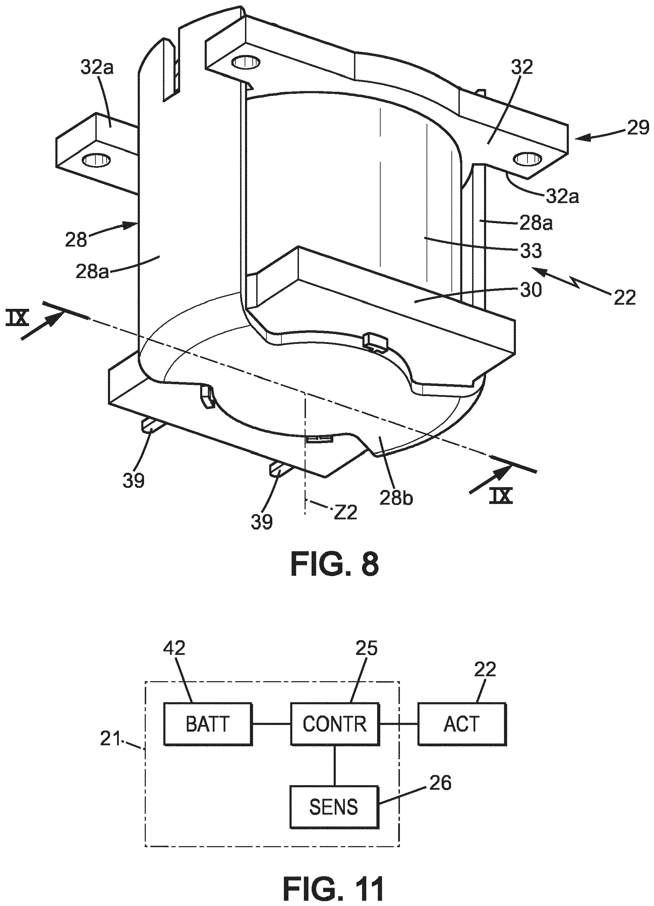

En variante, comme représenté schématiquement sur la figure 11, le dispositif antivibratoire 1 pourrait ne pas comporter de dispositif générateur d'énergie 15, mais une autre source d'énergie telle qu'une batterie 42 (BATT) alimentant le dispositif de commande 25. Cette batterie pourrait per exemple être disposée dans l'espace intérieur 7a susmentionné, qui serait alors adapté pour être ouvert en vue du remplacement de la batterie. Compte tenu de la faible consommation électrique, un tel remplacement pourrait avoir lieu à intervalles de temps assez longs.

Selon une autre variante, non-représentée, le dispositif pourrait comporter une deuxième chambre de compensation hydraulique communiquant avec la chambre de travail A par un deuxième passage étranglé, et la membrane 5b séparerait la chambre pneumatique P de cette deuxième chambre de compensation. Dans ce cas, l'actionneur 22 pourrait piloter le fonctionnement de cette deuxième chambre de compensation pour sélectivement, soit permettre des mouvements de liquide entre la chambre de travail A et la deuxième chambre de compensation (valve 36 ouverte), soit interdire les mouvements de liquide entre la chambre de travail A et la deuxième chambre de compensation (valve 36 fermée).

## Revendications

1. Dispositif antivibratoire hydraulique destiné à être interposé aux fins d'amortissement entre des premier et deuxième éléments rigides, ce dispositif antivibratoire comprenant :
- des première et deuxième armatures (2, 3) destinées à être fixées aux deux éléments rigides à réunir,
- un corps en élastomère (4) qui relie entre elles les première et deuxième armatures et qui délimite au moins partiellement une première chambre hydraulique (A),
- une deuxième chambre hydraulique (B) qui est délimitée par une paroi déformable (6) et qui communique avec la première chambre hydraulique (A) par l'intermédiaire d'un passage étranglé (C), les première et deuxième chambres hydrauliques et le passage étranglé formant un circuit hydraulique rempli de liquide,
- un actionneur (22) électromagnétique adapté pour commander le comportement antivibratoire du dispositif antivibratoire,
**caractérisé en ce que** ledit actionneur (22) comprend une ventouse à aimant permanent comportant :
- un circuit magnétique (28, 34, 40) incluant un organe d'actionnement (34) mobile entre une première position et une deuxième position,
- au moins un ressort (37) sollicitant l'organe d'actionnement (34) avec une première force orientée vers la première position,
- un aimant permanent (41) créant un champ magnétique permanent dans le circuit magnétique et sollicitant l'organe d'actionnement (34) avec une deuxième force orientée vers la deuxième position, la première force étant supérieure à la deuxième force lorsque l'organe d'actionnement (34) est dans la première position et la deuxième force étant supérieure à la première force lorsque l'organe d'actionnement (34) est dans la deuxième position,
- au moins une bobine (33) alimentée électriquement par un dispositif de commande (25), le dispositif de commande (25) étant adapté pour sélectivement soit augmenter ledit champ magnétique pour faire passer ledit organe d'actionnement (34) de la première à la deuxième position contre la sollicitation du ressort (37), soit diminuer ledit champ magnétique pour faire passer ledit organe d'actionnement (34) de la deuxième à la première position sous l'effet du ressort.

2. Dispositif antivibratoire selon la revendication 1, dans lequel ledit actionneur (22) est adapté pour sélectivement bloquer ou laisser libre une paroi mobile (5b) qui délimite partiellement la première chambre hydraulique (A).

3. Dispositif antivibratoire selon la revendication 1 ou la revendication 2, dans lequel l'organe d'actionnement est mobile en translation sur une course comprise entre 0.5 et 2 mm, avantageusement entre 0,7 et 1,5 mm, entre les première et deuxième positions.

4. Dispositif antivibratoire l'une quelconque des revendications précédentes, dans lequel le dispositif de commande (25) est adapté pour générer une impulsion de courant dans la bobine (33), soit dans un premier sens, soit dans un deuxième sens opposé au deuxième sens, pour sélectivement soit faire passer ledit organe d'actionnement (34) de la première à la deuxième position, soit faire passer ledit organe d'actionnement (34) de la deuxième à la première position.

5. Dispositif antivibratoire selon la revendication 4, dans lequel ladite impulsion de courant présente une durée inférieure à 100 ms.

6. Dispositif antivibratoire selon la revendication 4, dans lequel ladite impulsion de courant présente une puissance comprise entre 0,1 W et 1,5 W.

7. Dispositif antivibratoire selon l'une quelconque des revendications précédentes, dans lequel l'actionneur (22) comporte :
- une carcasse ferromagnétique (28) en forme de U ayant une base (28b) et deux ailes (28a) s'étendant jusqu'à des extrémités libres de part et d'autre d'un axe central (Z2), l'organe d'actionnement (34) comportant une palette (35) en matériau ferromagnétique qui est mobile selon l'axe central (Z2) et disposée entre les extrémités libres des deux ailes (28a),
- un noyau (40) en matériau ferromagnétique solidaire de la carcasse (28) et s'étendant longitudinalement selon l'axe central (Z2) entre une première extrémité proche de la base (28b) et une deuxième extrémité proche de la palette (35) de l'organe d'actionnement, la palette (35) étant écartée de la deuxième extrémité du noyau (40) dans la première position et au contact de la deuxième extrémité du noyau dans la deuxième position, et la bobine (33) étant enroulée autour dudit noyau.

8. Dispositif antivibratoire selon la revendication 7, dans lequel l'aimant permanent (41) est interposé entre le noyau (40) et la base (28b) de la carcasse.

9. Dispositif antivibratoire selon l'une quelconque des revendications précédentes, comportant en outre une chambre pneumatique (P) qui est délimitée vers l'actionneur (22) par un fond (12) doté d'un orifice (12b) et qui est séparée de la première chambre hydraulique (A) par une paroi souple (5b), l'organe d'actionnement étant adapté pour obturer ledit orifice (12b) sous la sollicitation du ressort (37) lorsque l'organe d'actionnement (34) est dans la première position, le ressort étant adapté pour laisser l'organe d'actionnement (34) ouvrir temporairement ledit orifice (12b) en cas de surpression dans la chambre pneumatique (P).

10. Dispositif antivibratoire selon l'une quelconque des revendications précédentes, comportant en outre une source d'énergie (15 ; 42), ledit dispositif antivibratoire étant entièrement alimenté par ladite source d'énergie (20 ; 42).

11. Dispositif antivibratoire selon la revendication 10, dans lequel ladite source d'énergie comprend un dispositif générateur de courant électrique (15) qui comprend d'une part, une microturbine (18) montée rotative dans le passage étranglé (C) et d'autre part, une génératrice (20) couplée à la microturbine pour produire du courant électrique lorsque la microturbine tourne.

12. Dispositif antivibratoire selon la revendication 11, comportant en outre :
- un convertisseur (24) adapté pour convertir en courant continu un courant électrique produit par la génératrice (20),
- un dispositif de stockage d'énergie électrique (23) alimenté par le convertisseur et alimentant le dispositif de commande (25).

13. Dispositif antivibratoire selon la revendication 10, dans lequel ladite source d'énergie comprend au moins une batterie (42).

14. Dispositif antivibratoire selon l'une quelconque des revendications précédentes, comportant en outre un capteur de vibrations (26) solidaire d'une des première et deuxième armatures (2, 3).

## Patentansprüche

1. Hydraulische Schwingungsdämpfungsvorrichtung, die vorgesehen ist, zu Dämpfungszwecken zwischen einem ersten und einem zweiten starren Element angeordnet zu werden, wobei diese Schwingungsdämpfungsvorrichtung aufweist:
- eine erste und zweite Armatur (2,3), die vorgesehen sind, an den zusammenzufügenden starren Elementen befestigt zu werden,
- einen Körper aus Elastomer (4), der die erste und zweite Armatur miteinander verbindet und der eine erste Hydraulikkammer (A) zumindest teilweise begrenzt,
- eine zweite Hydraulikkammer (B), die von einer verformbaren Wand (6) begrenzt wird und die über einen engen Kanal (C) mit der ersten Hydraulikkammer (A) in Verbindung steht, wobei die erste und zweite Hydraulikkammer und der enge Kanal einen mit Flüssigkeit gefüllten Hydraulikkreis bilden,
- einen elektromagnetischen Aktuator (22), der eingerichtet ist, um das Schwingungsdämpfungsverhalten der Schwingungsdämpfungsvorrichtung zu steuern,
**dadurch gekennzeichnet, dass** der Aktuator (22) ein Permanentmagnet-Luftventil aufweist, aufweisend:
- einen magnetischen Kreis (28, 34, 40) mit einem Stellglied (34), das zwischen einer ersten Position und einer zweiten Position bewegbar ist,
- mindestens eine Feder (37), die das Stellglied (34) mit einer zur ersten Position hin gerichteten ersten Kraft vorspannt,
- einen Permanentmagneten (41), der ein permanentes Magnetfeld in dem Magnetkreis erzeugt und das Stellglied (34) mit einer zur zweiten Position hingerichteten zweiten Kraft vorspannt, wobei die erste Kraft größer als die zweite Kraft ist, wenn das Stellglied (34) in der ersten Position ist, und die zweite Kraft größer als die erste Kraft ist, wenn das Stellglied (34) in der zweiten Position ist,
- mindestens eine von einer Steuervorrichtung (25) elektrisch gespeiste Spule (33), wobei die Steuervorrichtung (25) eingerichtet ist, selektiv entweder das Magnetfeld zu verstärken, um gegen die Vorspannung der Feder (37) das Stellglied (34) von der ersten in die zweite Position wechseln zu lassen, oder das Magnetfeld zu verringern, um unter Wirkung der Feder (37) das Stellglied (34) von der zweiten in die erste Position wechseln zu lassen.

2. Schwingungsdämpfungsvorrichtung nach Anspruch 1, in welcher der Aktuator (22) eingerichtet ist, eine bewegliche Wand (5b), die die erste Hydraulikkamer (A) teilweise begrenzt, selektiv zu blockieren oder frei zu geben.

3. Schwingungsdämpfungsvorrichtung nach Anspruch 1 oder Anspruch 2, in welcher das Stellglied über eine Hublänge zwischen 0,5mm und 2mm, vorteilhaft zwischen 0,7 und 1,5mm, zwischen der ersten und zweiten Position linear verschiebbar ist.

4. Schwingungsdämpfungsvorrichtung nach einem der vorstehenden Ansprüche, in welcher die Steuervorrichtung (25) eingerichtet ist, in der Spule (33) einen Stromimpuls entweder in eine erste Richtung oder in einer zur zweiten Richtung entgegengesetzten zweiten Richtung zu erzeugen, um selektiv das Stellglied (34) von der ersten in die zweite Position wechseln zu lassen oder das Stellglied (34) von der zweiten in die erste Position wechseln zu lassen.

5. Schwingungsdämpfungsvorrichtung nach Anspruch 4, in welcher der Stromimpuls eine Dauer von unter 100ms hat.

6. Schwingungsdämpfungsvorrichtung nach Anspruch 4, in welcher der Stromimpuls eine Leistung zwischen 0,1 W und 1,5 W hat.

7. Schwingungsdämpfungsvorrichtung nach einem der vorstehenden Ansprüche, in welcher der Aktuator (22) aufweist:
- ein U-förmiges ferromagnetisches Gestell (28) mit einer Basis (28b) und zwei sich beiderseits einer Zentralachse (Z2) zu freien Enden erstreckenden Flügeln (28a), wobei das Stellglied (34) eine Platte (35) aus ferromagnetischem Material aufweist, die entlang der Zentralachse (Z2) beweglich ist und zwischen den freien Enden der zwei Flügel (28a) angeordnet ist,
- einen Kern (40) aus ferromagnetischem Material, der mit dem Gestell (28) festverbunden ist und sich in Längsrichtung entlang der Zentralachse (Z2) zwischen einem in der Nähe der Basis (28b) gelegenen ersten Ende und einem in der Nähe der Platte (35) gelegenen zweiten Ende des Stellglieds erstreckt, wobei die Platte (35) in der ersten Position von dem zweiten Ende des Kerns (40) beabstandet ist und in der zweiten Position in Kontakt mit dem zweiten Ende des Kerns ist, und wobei die Spule (33) um den Kern gewickelt ist.

8. Schwingungsdämpfungsvorrichtung nach Anspruch 7, in welcher der Permanentmagnet (41) zwischen dem Kern (40) und der Basis (28b) des Gestells angeordnet ist.

9. Schwingungsdämpfungsvorrichtung nach einem der vorstehenden Ansprüche, ferner aufweisend eine Pneumatikkammer (P), die zum Aktuator (22) hin von einem mit einer Öffnung (12b) versehenen Boden (12) begrenzt wird und die mittels einer nachgiebigen Wand (5b) von der ersten Hydraulikkammer (A) getrennt ist, wobei das Stellglied eingerichtet ist, unter Vorspannung der Feder (37) die Öffnung (12b) zu verschließen, wenn das Stellglied (34) in der ersten Position ist, wobei die Feder eingerichtet ist, das Stellglied (34) im Fall eines Überdrucks in der Pneumatikkammer (P) die Öffnung (12b) temporär öffnen zu lassen.

10. Schwingungsdämpfungsvorrichtung nach einem der vorstehenden Ansprüche, ferner aufweisend eine Energiequelle (15; 42), wobei die Schwingungsdämpfungsvorrichtung vollständig von der Energiequelle (20; 42) versorgt wird.

11. Schwingungsdämpfungsvorrichtung nach Anspruch 10, in welcher die Energiequelle eine elektrischen Strom erzeugende Generatorvorrichtung (15) aufweist, die einerseits eine in dem engen Kanal (C) drehbar eingebaute Mikroturbine (18) und andererseits einen mit der Mikroturbine gekoppelten Generator (20) aufweist, um elektrischen Strom zu erzeugen, wenn sich die Mikroturbine dreht.

12. Schwingungsdämpfungsvorrichtung nach Anspruch 11, ferner aufweisend:
- einen Wandler (24), der zum Umwandeln eines von dem Generator (20) erzeugten Stroms in Gleichstrom eingerichtet ist,
- eine von dem Wandler gespeiste und die Steuervorrichtung (25) speisende Speichervorrichtung (23) zum Speichern von elektrischer Energie.

13. Schwingungsdämpfungsvorrichtung nach Anspruch 10, in welcher die Energiequelle mindestens eine Batterie (42) aufweist.

14. Schwingungsdämpfungsvorrichtung nach einem der vorstehenden Ansprüche, ferner aufweisend einen Schwingungssensor (26), der mit einer der ersten und zweiten Armatur (2, 3) festverbunden ist.

## Claims

1. Hydraulic vibration damping device intended to be inserted for the purposes of damping between first and second rigid elements, with this vibration damping device comprising:
- first and second frames (2, 3) intended to be fixed to the two rigid elements to be joined,
- an elastomer body (4) that connects first and second frames together and which delimits at least partially a first hydraulic chamber (A),
- a second hydraulic chamber (B) which is delimited by a deformable wall (6) and which communicates with the first hydraulic chamber (A) by the intermediary of a constricted passage (C), with the first and second hydraulic chambers and with the constricted passage forming a hydraulic circuit filled with liquid,
- an electromagnetic actuator (22) suited to control the vibration damping behaviour of the vibration damping device,
**characterised in that** said actuator (22) comprises a suction cup with a permanent magnet comprising:
- a magnetic circuit (28, 34, 40) including an actuating member (34) mobile entre a first position and a second position,
- at least one spring (37) soliciting the actuating member (34) with a first force directed towards the first position,
- a permanent magnet (41) creating a permanent magnetic field in the magnetic circuit and soliciting the actuating member (34) with a second force directed towards the second position, with the first force being greater than the second force when the actuating member (34) is in the first position and with the second force being greater than the first force when the actuating member (34) is in the second position,
- at least one coil (33) electrically supplied by a control device (25), with the control device (25) being suited to selectively either increase said magnetic field in order to have said actuating member (34) pass from the first to the second position against the solicitation of the spring (37), or to decrease said magnetic field in order to have said actuating member (34) pass from the second to the first position under the effect of the spring.

2. Vibration damping device according to claim 1, wherein said actuator (22) is suited to selectively block or leave free a mobile wall (5b) which partially delimits the first hydraulic chamber (A).

3. Vibration damping device according to claim 1 or claim 2, wherein the actuating member is mobile in translation over a course between 0.5 and 2 mm, advantageously between 0.7 and 1.5 mm, between the first and second positions.

4. Vibration damping device according to any of the preceding claims, wherein the control device (25) is suited to generate a pulse of current in the coil (33), either in a first direction, or in a second direction opposite the second direction, in order to selectively either have said actuating member (34) pass from the first to the second position, or to have said actuating member (34) pass from the second to the first position.

5. Vibration damping device according to claim 4, wherein said pulse of current has a duration less than 100 ms.

6. Vibration damping device according to claim 4, wherein said pulse of current has a power between 0.1 W and 1.5 W.

7. Vibration damping device as claimed in any preceding claim, wherein the actuator (22) comprises:
- a ferromagnetic shell (28) in the shape of a U having a base (28b) and two wings (28a) extending to the free ends on either side of a central axis (Z2), with the actuating member (34) comprising a pallet (35) made of a ferromagnetic material which is mobile according to the axis central (Z2) and arranged between the free ends of the two wings (28a),
- a core (40) made of ferromagnetic material integral with the shell (28) and extending longitudinally along the central axis (Z2) between a first end close to the base (28b) and a second end close to the pallet (35) of the actuating member, with the pallet (35) being separated from the second end of the core (40) in the first position and in contact with the second end of the core in the second position, and with the coil (33) being wound around said core.

8. Vibration damping device according to claim 7, wherein the permanent magnet (41) is inserted between the core (40) and the base (28b) of the shell.

9. Vibration damping device as claimed in any preceding claim, comprising furthermore a pneumatic chamber (P) which is delimited towards the actuator (22) by a bottom (12) provided with an orifice (12b) and which is separated from the first hydraulic chamber (A) by a flexible wall (5b), with the actuating member being suited for closing off said orifice (12b) under the solicitation of the spring (37) when the actuating member (34) is in the first position, with the spring being suited to allow the actuating member (34) to temporarily open said orifice (12b) in case of excessive pressure in the pneumatic chamber (P).

10. Vibration damping device as claimed in any preceding claim, comprising furthermore a source of energy (15; 42), with said vibration damping device being entirely supplied by said source of energy (20; 42).

11. Vibration damping device according to claim 10, wherein said source of energy comprises a device for generating electric current (15) which comprises on the one hand, a microturbine (18) rotatably mounted in the constricted passage (C) and on the other hand, a generator (20) coupled to the microturbine in order to produce an electric current when the microturbine is rotating.

12. Vibration damping device according to claim 11, comprising furthermore:
- a converter (24) suited for converting into direct current an electric current produced by the generator (20),
- a device for storing electrical energy (23) supplied by the converter and supplying the control device (25).

13. Vibration damping device according to claim 10, wherein said source of energy comprises at least one battery (42).

14. Vibration damping device as claimed in any preceding claim, comprising furthermore a vibration sensor (26) integral with one of the first and second frames (2, 3).
